# FASCICULE DE BREVET EUROPEEN

(11) **EP 3 139 100 B1**
(45) Date de publication et mention de la délivrance du brevet: **26.05.2021**
(21) Numéro de dépôt: 16187459.9
(22) Date de dépôt: 06.09.2016
(51) Int. Cl.: F24D 11/02, F24D 17/02, F24D 19/10, F24F 5/00, F24F 12/00

(54) **INSTALLATION ET PROCÉDÉ DE PRODUCTION D'EAU CHAUDE ASSOCIÉS**
ANLAGE UND VERFAHREN ZUR WARMWASSERERZEUGUNG
SYSTEM AND METHOD FOR PRODUCING HOT WATER

(30) Priorité: 07.09.2015 FR 1558284
(43) Date de publication de la demande: 08.03.2017
(73) Titulaire: France Air, 01700 Beynost (FR)
(72) Inventeur: CACHOT, Lionel, 69400 VILLEFRANCHE (FR)
(74) Mandataire: Lavoix

(56) Documents cités:
- DE-A1- 19 900 358
- FR-A1- 2 813 117
- GB-A- 2 247 072
- NL-C- 2 006 250

## Description

La présente invention concerne un bâtiment, équipé d'une installation de production d'eau chaude, pour le bâtiment tel qu'un immeuble d'habitation ou de bureaux, un bâtiment de santé, une cuisine professionnelle, une piscine collective, un bâtiment sportif, un bâtiment industriel, un hôtel ou encore une maison, ainsi qu'un procédé de production d'eau chaude associé.

Les bâtiments sont parfois équipés d'un système collectif de ventilation mécanique contrôlée (VMC) permettant l'extraction de l'air vicié de chacun des locaux à ventiler avant son évacuation à l'extérieur du bâtiment. L'air vicié étant généralement issu d'air neuf préalablement thermo-régulé, c'est-à-dire chauffé ou refroidi, pour le confort des occupants des locaux, il en résulte une perte d'énergie thermique lors de l'évacuation à l'extérieur de l'air vicié.

Par ailleurs, pour l'alimentation des locaux en eau chaude sanitaire ou de chauffage, les bâtiments comprennent généralement des systèmes centralisés ou individuels de production d'eau chaude.

GB-A-2 247 072 décrit un système pour le chauffage et le refroidissement d'un bâtiment ainsi que pour la fourniture d'eau chaude sanitaire. Ce système comprend une pompe à chaleur ainsi qu'un réservoir thermique, dans lequel de l'eau constitue un matériau de stockage de chaleur. Le système comprend également un échangeur de chaleur avec un flux d'air extrait du bâtiment, qui fournit de la chaleur extraite de ce flux d'air au réservoir et à la pompe à chaleur par l'intermédiaire d'une boucle d'éthylène glycol. GB-A-2 247 072 ne divulgue pas que l'installation comprend un premier circulateur du fluide caloporteur au sein du premier circuit, et que le ballon de stockage inclut en son sein un deuxième échangeur de chaleur entre le fluide caloporteur du ballon de stockage et l'eau du réseau d'eau, pour que l'eau du réseau d'eau soit réchauffée par échange thermique avec le fluide caloporteur stocké dans le ballon de stockage, et que le deuxième échangeur est connecté d'une part à une conduite d'arrivée d'eau du réseau d'eau, et d'autre part à une conduite pour l'alimentation en eau de moyens de chauffage d'eau sanitaire du bâtiment.

Le document FR-A-2 984 997 décrit une installation de traitement d'air permettant de récupérer de l'énergie dans un flux d'air vicié extrait d'un logement afin de l'utiliser pour le chauffage de l'eau destinée à des utilisations sanitaires ou à la régulation thermique de l'air intérieur du bâtiment. Néanmoins, l'énergie ainsi récupérée reste insuffisante pour satisfaire à la fois aux besoins d'eau chaude sanitaire et de chauffage, si bien que des moyens de chauffage complémentaires doivent être utilisés.

C'est à cet inconvénient qu'entend remédier l'invention en proposant un bâtiment, équipé d'une installation qui permet d'optimiser l'exploitation de l'énergie thermique provenant du flux d'air extrait du bâtiment, afin de satisfaire à une quantité plus importante de besoins en chauffage et réduire le recours aux moyens de chauffage complémentaires.

A cet effet, l'invention concerne un bâtiment équipé d'une installation de production d'eau chaude, tel que défini dans la revendication 1.

Grâce à l'invention, la récupération d'énergie à partir de l'air extrait du bâtiment peut être effectuée de façon indépendante des besoins énergétiques de la pompe à chaleur et du bâtiment, l'énergie thermique étant stockée dans le ballon de stockage. Ainsi, de l'énergie thermique peut être récupérée à tout instant de fonctionnement du dispositif d'extraction, afin d'être accumulée dans le ballon de stockage. La pompe à chaleur peut ensuite utiliser cette énergie stockée, indépendamment de l'énergie disponible à ce moment-là dans le flux d'air extrait.

D'autres caractéristiques avantageuses de l'invention sont définies dans les revendications 2 à 5.

L'invention concerne également un procédé de production d'eau chaude tel que défini dans la revendication 6.

D'autres caractéristiques avantageuses de l'invention sont définies dans les revendications 7 à 9.

L'invention sera mieux comprise à la lecture de la description qui va suivre, donnée uniquement à titre d'exemple non limitatif et non exhaustif et faite en se référant aux dessins dans lesquels :
- la figure 1 est un schéma de fonctionnement d'une installation conforme à un premier mode de réalisation de l'invention ;
- la figure 2 est un schéma de fonctionnement d'une installation conforme à un deuxième mode de réalisation de l'invention ;
- la figure 3 est une coupe schématique d'un dispositif d'extraction appartenant à une installation conforme à un troisième mode de réalisation de l'invention ;
- la figure 4 est une vue similaire à la figure 3 pour un dispositif d'extraction appartenant à une installation conforme à un quatrième mode de réalisation de l'invention.

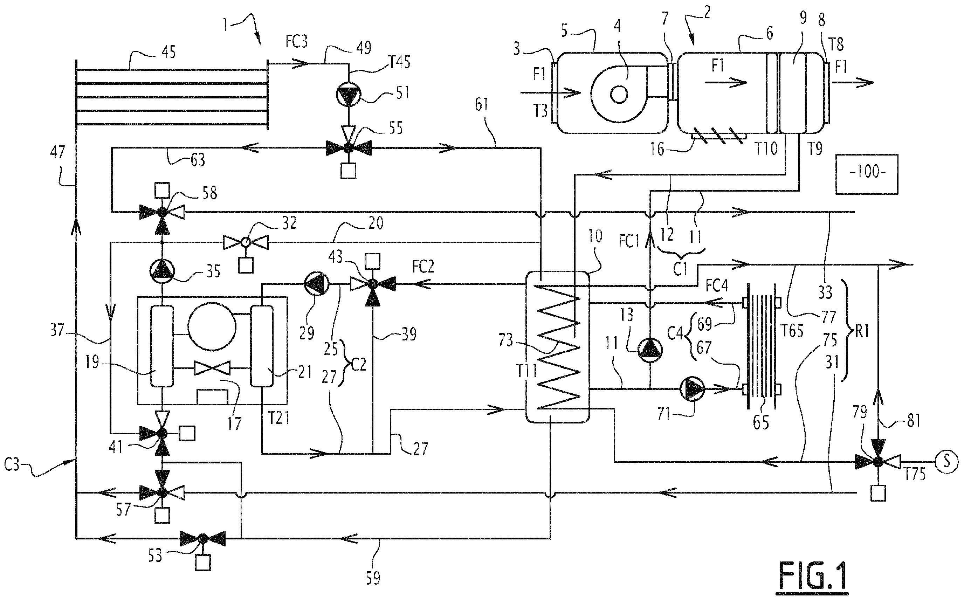

La figure 1 illustre une installation thermodynamique 1 qui est conçue pour équiper un bâtiment, tel qu'un immeuble d'habitation, un immeuble de bureaux, un bâtiment de santé, une cuisine professionnelle, une piscine collective, un bâtiment sportif, un bâtiment industriel, un hôtel ou encore une maison. De manière générale, sur les figures, les différents équipements composant l'installation 1 sont représentés de façon symbolique, et les circuits de fluide caloporteur ainsi que les conduites d'eau les reliant sont représentés par des traits continus.

L'installation 1 permet de gérer, d'opérer et d'optimiser des échanges de chaleur entre l'extérieur et l'intérieur du bâtiment.

L'installation 1, qui est intégrée dans le bâtiment, lequel n'est pas représenté aux figures, comprend un dispositif d'extraction 2 d'un flux d'air F1. Le dispositif d'extraction 2 forme par exemple un système de ventilation mécanique contrôlé du bâtiment, parfois abrégé « VMC », et permet d'extraire le flux d'air F1 depuis l'intérieur du bâtiment, et en particulier depuis l'intérieur de plusieurs locaux, bureaux ou appartements du bâtiment, par exemple à l'aide d'un réseau de gaines de ventilation. Le dispositif d'extraction 2 permet de transmettre le flux d'air F1 vers l'extérieur du bâtiment.

Le dispositif d'extraction 2 forme un caisson avec un compartiment 5 et un compartiment 6, préférentiellement placés sur le toit du bâtiment ou à l'extérieur de ce dernier, à proximité de l'une de ses façades. Alternativement, les compartiments 5 et 6 peuvent être placés dans des combles, des sous-sols ou des locaux techniques du bâtiment.

Le dispositif d'extraction 2 comprend en particulier une bouche d'extraction 3 parfois dénommée « piquage » mettant en communication le compartiment 5 avec l'intérieur du bâtiment, par l'intermédiaire du réseau de gaines de ventilation susmentionné. Le flux d'air F1 en provenance de l'intérieur du bâtiment est d'abord admis dans le compartiment 5 par l'intermédiaire de la bouche d'extraction 3 à une température T3, laquelle correspond sensiblement à la température de l'air intérieur du bâtiment. Afin que l'air intérieur du bâtiment soit admis dans le compartiment 5, le dispositif d'extraction 2 comprend un extracteur d'air 4 mécanique, qui inclut dans l'exemple un ventilateur et qui permet de mettre cet air en mouvement, en créant une dépression aspirante au niveau de la bouche d'extraction 3. Tel que cela est représenté à la figure 1, l'extracteur d'air 4 est avantageusement disposé au sein du compartiment 5. Le dispositif d'extraction 2 comprend également une bouche de transfert 7 du flux d'air F1 depuis le compartiment 5 vers le compartiment 6, la bouche de transfert 7 étant disposée à la sortie de l'extracteur d'air 4, et ménagée dans la paroi du compartiment 5, de manière à mettre ce dernier en communication avec le compartiment 6. Le dispositif d'extraction 2 comprend également une bouche de sortie 8 du flux d'air F1, afin de permettre à ce dernier de s'échapper vers l'extérieur du compartiment 6. La bouche de sortie 8 met en communication l'intérieur de ce dernier avec l'extérieur du bâtiment. Le flux d'air F1 est ainsi transféré depuis l'intérieur du bâtiment vers l'extérieur du bâtiment par l'intermédiaire du dispositif d'extraction 2. Le flux d'air F1 s'échappe de la bouche de sortie 8 avec une température T8. Les compartiments 5 et 6 peuvent être séparés en étant reliés par la bouche de transfert 7, tel qu'illustré, ou former au contraire un ensemble monobloc sans séparation, situation dans laquelle la bouche de transfert 7 est facultative.

L'installation 1 comprend également un échangeur thermique 9, permettant un échange de chaleur entre le flux d'air F1, lors de son passage au sein du compartiment 6, et un fluide caloporteur qui circule au sein de l'échangeur 9. Ce dernier est par exemple un échangeur dit « batterie à ailettes » ou échangeur dit « cyclonique », et forme une batterie d'échange entre l'air du flux d'air F1 et le fluide caloporteur circulant en son sein. Tel qu'illustré à la figure 1, l'échangeur 9 est placé au sein du compartiment 6 entre la bouche de transfert 7 et la bouche de sortie 8 de manière à ce que le flux d'air F1 passe au travers de l'échangeur 9 et délivre ainsi une portion de sa chaleur embarquée.

De façon préférentielle, le fluide caloporteur est de l'eau, ou pour le moins un liquide à base d'eau. A titre de variante, le fluide caloporteur peut être un autre type de liquide, par exemple frigorifique, voire un gaz.

L'échangeur 9 forme ainsi préférentiellement un échangeur air-eau ou alternativement air-gaz. Le fluide caloporteur entre dans l'échangeur 9 à une température T9, et en ressort à une température T10.

Le compartiment 6 est également pourvu d'une bouche d'urgence 16. Sur les figures, la boucle 16 est représentée en partie basse du compartiment 6. En variante préférentielle la bouche d'urgence est située en partie latérale ou au-dessus du compartiment 6, et qui permet l'évacuation vers l'extérieur de fumées contenues dans le flux d'air F1 en cas d'incendie, pour éviter qu'elles ne traversent l'échangeur 9.

L'installation 1 comprend également un ballon de stockage 10 du fluide caloporteur. Le terme « ballon de stockage » désigne un contenant fermé du genre citerne ou cuve permettant de renfermer un volume prédéterminé de fluide caloporteur. D'autres moyens de stockage de fluides caloporteur adaptés peuvent être mis en œuvre en lieu et place du ballon de stockage susmentionné. De préférence, le ballon de stockage 10 permet un stockage sensiblement adiabatique du fluide caloporteur. Il est pour le moins calorifugé, afin de conserver le fluide caloporteur à une température T11 sensiblement constante, et comprise par exemple dans une plage de -10°C à 90°C. En stockant le fluide caloporteur, le ballon de stockage 10 permet de stocker une réserve d'énergie thermique interne, sous forme de chaleur.

En fonction de la taille du bâtiment, le ballon de stockage 10 a une capacité unitaire comprise entre 0,3 m³ et 3 m³. Pour pallier à des difficultés d'installation ou à un besoin supérieur de stockage, plusieurs ballons peuvent être installés. Des matériaux à changement de phase peuvent aussi être utilisés dans le ballon de stockage 10 pour réduire le volume nécessaire de fluide caloporteur. Le ballon de stockage 10 est préférentiellement placé de façon déportée par rapport au dispositif d'extraction 2. Il est en particulier placé au sein du bâtiment, par exemple dans un local adapté, du genre local technique, comble ou cave.

L'installation 1 comprend un circuit C1 de fluide caloporteur qui relie l'échangeur 9 au ballon de stockage 10. Ce circuit C1 inclut une ligne 11, laquelle relie le ballon de stockage 10 à l'échangeur 9, pour transporter le fluide caloporteur stocké dans le ballon de stockage 10 jusqu'à l'échangeur 9 en vue de sa circulation au sein de l'échangeur 9. Le circuit C1 inclut également une ligne 12 permettant de ramener le fluide caloporteur depuis l'échangeur 9 jusqu'au ballon de stockage 10, après que le fluide caloporteur ait échangé de la chaleur au sein de l'échangeur 9.

La ligne 11 est avantageusement connectée dans une zone basse du ballon de stockage 10, alors que la ligne 12 est préférentiellement connectée en partie haute du ballon de stockage 10. Le circuit C1, et en particulier la ligne 11 et la ligne 12, se présentent sous la forme de conduites, ou d'un réseau de conduites, de fluide caloporteur.

Le circuit C1 inclut un circulateur 13 du fluide caloporteur, au sein de la ligne 11, qui se présente par exemple sous la forme d'une pompe apte à faire circuler le fluide caloporteur dans le circuit C1 dans le sens indiqué par la flèche FC1 sur la figure 1. De manière générale, les circulateurs de l'installation 1 seront représentés sous la forme d'un cercle au sein duquel est disposée une flèche FC1, FC2, FC3, FC4 et FC5, qui donne le sens de circulation de fluide caloporteur imposé par le circulateur concerné.

Grâce au circuit C1 et au circulateur 13, le fluide caloporteur est extrait du ballon de stockage 10, puis transporté jusqu'à l'échangeur 9 pour recevoir de la chaleur du flux d'air F1 par l'intermédiaire de cet échangeur. Le fluide caloporteur est ensuite rapporté au ballon de stockage 10 par le circuit C1 et le circulateur 13 pour être à nouveau stocké.

Le stock de fluide caloporteur inclus dans le ballon de stockage 10 forme ainsi une réserve d'énergie thermique qui est entretenue par échange du fluide caloporteur avec le flux d'air F1. L'installation 1 est amenée à utiliser de différentes manières cette réserve thermique comme décrit dans ce qui suit.

L'installation 1 permet ainsi de mettre en œuvre un procédé de production d'eau chaude pour le bâtiment, le procédé comportant les étapes suivantes :
- a) extraction du flux d'air F1 provenant de l'intérieur du bâtiment, par l'intermédiaire du piquage 3 du dispositif d'extraction 2, afin de le faire circuler vers l'extérieur de ce dernier par l'intermédiaire de la bouche de sortie 8, qui forme par exemple un piquage de sortie
- b) mise en circulation du fluide caloporteur au sein du circuit C1 au moyen du circulateur 13 ;
- c) échange thermique entre le flux d'air F1 et le fluide caloporteur, au moyen de l'échangeur 9 ;
- d) stockage du fluide caloporteur circulant dans le circuit C1 au sein du ballon de stockage 10.

L'installation comprend une unité 100 de pilotage automatique, par exemple un automate, de ses différents composants. L'unité de pilotage 100 commande au circulateur 13 de s'arrêter de fonctionner pour interrompre la circulation du fluide caloporteur dans le circuit C1 si la température T3 du flux d'air F1 est inférieure ou égale à la température T9 d'entrée de fluide caloporteur dans l'échangeur 9, ou à la température T11 du fluide caloporteur stocké dans le ballon de stockage 10, tout en maintenant le dispositif d'extraction 2 en marche afin que la fonction de ventilation du bâtiment soit toujours assurée.

Il ressort des explications qui précèdent que l'installation 1 est pourvue de capteurs de température, lesquels ne sont pas représentés sur les figures, pour la clarté du dessin.

En pratique, l'unité de pilotage 100 est reliée aux différents organes de l'installation par des liaisons électriques filaires, voire non filaires. Pour la clarté du dessin, ces liaisons ne sont pas non plus représentées à la figure 1.

L'installation 1 illustrée à la figure 1 comprend également une pompe à chaleur 17, laquelle forme un moyen actif de transfert d'énergie thermique, et qui nécessite d'être alimenté en énergie, par exemple électrique, et/ou provenant d'un combustible tel que du gaz, pour fonctionner. La pompe à chaleur 17 est par exemple placée au sein du bâtiment, à proximité du ballon de stockage 10.

La pompe à chaleur 17 comprend une batterie d'échange 19 qui forme par exemple un condenseur, et qui est parfois appelée « côté chaud » de la pompe à chaleur 17. La pompe à chaleur 17 comprend également une batterie d'échange 21 formée par exemple par un évaporateur de la pompe à chaleur 17, et parfois appelée « côté froid » de la pompe à chaleur 17.

La pompe à chaleur 17 est conçue pour opérer un transfert de chaleur depuis la batterie 21 jusqu'à la batterie 19, par un travail thermodynamique, par exemple par mise en œuvre d'un ou plusieurs cycles thermodynamique(s). La batterie 19 est connectée à un réseau d'eau R1 du bâtiment, cette eau étant destinée à un usage sanitaire, et/ou à des fins de chauffage du bâtiment, en particulier par le biais de radiateurs à eau chaude, ou d'un ventilo-convecteur, d'une cassette plafonnière, d'une centrale de traitement d'air. L'eau du réseau R1 peut également être destinée à alimenter une machine et constituer ainsi une eau dite de « process ».

Le réseau d'eau R1 comprend une conduite d'arrivée 31 d'eau en provenance par exemple d'un réseau collectif de distribution d'eau alimentant le bâtiment. La conduite d'arrivée 31 est connectée à la batterie d'échange 19 de sorte que cette eau du réseau collectif passe au travers de la batterie d'échange 19. Le réseau d'eau R1 comprend également une conduite 33 d'alimentation en eau chaude, qui est connectée à la sortie de la batterie d'échange 19, cette eau chaude étant obtenue par réchauffage de l'eau de la conduite d'arrivée 31 au sein de la batterie d'échange 19. La conduite d'alimentation 33 permet, par exemple, d'alimenter un circuit de distribution d'eau de chauffage, ou un système de préparation d'eau chaude sanitaire. L'installation 1 comprend un circulateur d'eau 35 pour faire circuler l'eau à réchauffer au sein du réseau d'eau R1.

La pompe à chaleur 17 transfère ainsi de la chaleur pour chauffer l'eau du réseau d'eau par l'intermédiaire de la batterie 19, l'eau du réseau d'eau passant au sein de la batterie 19 pour être chauffée.

La batterie 21 est, quant à elle, connectée à du fluide caloporteur en provenance du ballon de stockage 10.

En l'espèce, l'installation 1 comprend un circuit C2 de fluide caloporteur, qui relie la batterie 21 au ballon de stockage 10. Le circuit C2 comprend une ligne 25, qui permet d'emmener le fluide depuis le ballon de stockage 10 jusqu'à la batterie d'échange 21, et une ligne 27, qui permet de ramener le fluide caloporteur refroidi par la batterie d'échange 21 jusqu'au ballon de stockage 10. Le circuit C2 comprend un circulateur 29, du même genre que le circulateur 13, pour faire circuler le fluide caloporteur au sein du circuit C2 selon la direction indiquée par la flèche FC2 sur la figure 1. La ligne 25 est avantageusement connectée en partie haute du ballon de stockage, alors que la ligne 27 est connectée en partie basse de ce dernier.

L'installation 1 permet donc de mettre en œuvre les étapes suivantes :
- e) mise en circulation FC2 du fluide caloporteur, ce dernier ayant été préalablement stocké dans le ballon de stockage 10, au sein du circuit C2 au moyen du circulateur 29, et
- f) transfert de chaleur, au moyen de la pompe à chaleur 17, depuis le fluide caloporteur circulant dans le circuit C2 par l'intermédiaire de la batterie 21, vers l'eau du réseau d'eau du bâtiment par l'intermédiaire de la batterie 19.

L'installation 1 comprend également des lignes de pontage 37 et 39 qui sont connectées respectivement en dérivation du réseau d'eau R1 et du circuit C2. L'installation 1 comprend également des vannes mélange modulantes 41, 43 associées respectivement aux lignes de pontage 37, 39. La vanne de mélange 41 peut évoluer progressivement entre une configuration dans laquelle le fluide caloporteur circule dans la batterie d'échange 19 depuis la ligne 31 ou une ligne 59 qui sera décrite ci-après, et une configuration alternative dans laquelle le fluide caloporteur tourne en boucle entre la batterie d'échange 19 et la ligne de pontage 37, sous l'action du circulateur 35. La présence de la vanne de mélange 41 et de la ligne de pontage 37 constitue ainsi un dispositif de sécurité permettant de protéger la pompe à chaleur 17 lorsque le fluide caloporteur est trop froid. La vanne de mélange modulante 43, quant à elle, peut évoluer progressivement entre une configuration dans laquelle le fluide caloporteur circule dans le circuit C2 en boucle entre le ballon de stockage 10 et la batterie d'échange 21, et une configuration alternative dans laquelle le fluide caloporteur tourne en boucle entre la batterie d'échange 21 et la ligne de pontage 39, sous l'action du circulateur 29. La présence de la vanne de mélange 43 et de la ligne de pontage 39 constitue ainsi un dispositif de sécurité permettant de protéger la pompe à chaleur 17 lorsque le fluide caloporteur est trop chaud. De préférence les vannes de mélange 41 et 43 sont actionnées par des électrovannes, lesquelles sont commandées par l'unité de pilotage automatique 100.La présence des vannes 41 et 43, ainsi que celle des lignes 37 et 39 associées, est toutefois facultative.

Une ligne 20 relie la batterie 19 au ballon de stockage 10, et est équipée d'une vanne de passage 32 permettant sélectivement d'autoriser ou d'interdire une mise en circulation, par le circulateur 35, du fluide caloporteur directement depuis la batterie jusqu'au ballon de stockage 10.

La chaleur stockée sous forme de fluide caloporteur dans le ballon de stockage 10 est utilisée pour chauffer l'eau du réseau d'eau R1 grâce à la pompe à chaleur 17. Ainsi, la chaleur du flux d'air F1 peut être récupérée à un instant différent de celui auquel de l'eau est réchauffée pour le réseau d'eau R1. En particulier, de la chaleur en provenance du dispositif d'extraction 2 peut être accumulée pendant une longue durée, alors que l'utilisation d'eau chaude dans le bâtiment s'effectue généralement sur une durée plus courte, par exemple en début et en fin de journée. Le fonctionnement de l'installation 1 est ainsi particulièrement optimisé aux besoins en eau chaude sanitaire du bâtiment et aux possibilités de récupérer de la chaleur en provenance du flux d'air F1.

L'installation 1 comprend également un système de captage solaire 45, par exemple du type atmosphérique ou du type thermique, qui permet de récupérer de la chaleur solaire, par exemple par rayonnement du soleil sur le système de captage solaire 45. Le système de captage solaire 45 comprend une surface de captage de l'énergie solaire et un échangeur pour transmettre la chaleur captée au fluide caloporteur. Il comprend également, de façon optionnelle, un ballon de stockage de fluide caloporteur non illustré. Le système de captage solaire 45 peut également se diviser en plusieurs sections de captage séparées, reliées entre elles par un circuit de fluide caloporteur. Le système de captage solaire 45 est ainsi préférentiellement placé sur le toit du bâtiment. Le système de captage solaire 45 permet de transmettre la chaleur reçue soit au fluide caloporteur stocké, soit à l'eau d'alimentation du réseau d'eau R1. En l'espèce, au sein du système de captage solaire 45, ou de son échangeur, peuvent circuler soit le fluide caloporteur, soit de l'eau destinée au réseau d'eau 33, optionnellement glycolée. Le système de captage solaire 45 est pourvu d'une ligne d'entrée 47 et d'une ligne de sortie 49. La ligne de sortie 49 est pourvue d'un circulateur 51 similaire au circulateur précédemment décrit et permettant de faire circuler soit le fluide caloporteur, soit l'eau susmentionnée, dans la direction indiquée par la flèche FC3 sur la figure 1. L'installation 1 comprend une vanne de passage 53 des vannes d'aiguillage 55, 57 et 58 qui sont avantageusement commandées par l'unité de pilotage automatique 100. L'unité de pilotage automatique 100 peut décider, en commandant les vannes 53, 55, 57 et 58, lequel du fluide caloporteur ou de l'eau de distribution sera admis au sein du système de captage solaire 45. En l'espèce, une ligne de fluide caloporteur 59 relie le ballon de stockage 10, en partie basse de ce dernier, à la vanne de passage 53, laquelle est elle-même connectée à la ligne d'entrée 47 du système de captage solaire 45. Ainsi, par ouverture de la vanne de passage 53, le fluide caloporteur en provenance du ballon de stockage 10 est admis au sein du système de captage solaire 45. Après être réchauffé au sein de ce dernier, le fluide caloporteur progresse dans la ligne de sortie 49, passe par le circulateur 51, et atteint la vanne d'aiguillage 55, laquelle est alors dans une configuration qui permet d'aiguiller le fluide caloporteur dans une ligne 61 de l'installation 1, cette dernière reliant la vanne d'aiguillage 55 au ballon de stockage 10, en partie haute de ce dernier. Les lignes 47, 49, 59 et 61 forment ainsi un circuit C3 de fluide caloporteur reliant le système de captage solaire 45 au ballon de stockage 10. Le circulateur 51 permet de faire circuler le fluide caloporteur au sein de ce circuit C3.

Par ailleurs, la conduite d'arrivée d'eau 31 est connectée à la vanne d'aiguillage 57, laquelle permet d'orienter l'eau soit en direction de la batterie d'échange 19, soit en direction de la ligne d'entrée 47 du système de captage solaire 45. L'eau en provenance de la conduite d'arrivée 31 et admise dans le système de captage solaire 45 ressort de ce dernier par l'intermédiaire de la ligne de sortie 49, passe par le circulateur 51, puis par la vanne d'aiguillage 55. L'installation 1 comprend une ligne de transfert 63, qui relie la vanne d'aiguillage 55 à la vanne d'aiguillage 58. La vanne d'aiguillage 55 oriente alors l'eau en provenance du système de captage solaire 45 dans la ligne de transfert 63 jusqu'à la vanne d'aiguillage 58. La vanne d'aiguillage 58 oriente alors cette eau dans la conduite d'alimentation 33.

En définitive, les vannes 53, 55, 57 et 58 appartiennent à un système d'aiguillage permettant d'autoriser sélectivement un transfert de la chaleur solaire reçue par le système de captage solaire 45 :
- soit au fluide caloporteur du circuit C3 en vue de son stockage dans le ballon de stockage 10,
- soit directement à l'eau du réseau d'eau.

De préférence, on transfère directement la chaleur solaire reçue à l'eau du réseau d'eau R1 lorsque la température T45 du fluide caloporteur, à l'issue de son passage au sein du système de captage solaire 45, est supérieure à une température de consigne à laquelle on souhaite porter l'eau de la conduite d'alimentation 33, la température de consigne étant fonction de l'utilisation ultérieure de cette eau. Lorsque la température de l'eau du circuit d'eau R1 est au-dessus d'un seuil de consigne prédéterminé, et que la température T45 est supérieure à la température T11, l'unité de pilotage 100 commande le système d'aiguillage 53, 55, 57 et 58 pour faire circuler le fluide caloporteur au sein du système de captage solaire 45 afin que la chaleur solaire soit stockée dans le ballon de stockage 10 pour une utilisation ultérieure. En l'absence de soleil, ou lorsque la quantité de chaleur reçue par le système de captage solaire 45 est inférieure à la valeur du seuil par exemple la nuit ou en cas de temps nuageux, l'unité de pilotage 100 commande le système d'aiguillage 53, 55, 57 et 58 pour que ni le fluide caloporteur ni l'eau du réseau d'eau 31, 33 ne circule au sein du système de captage solaire 45. Dans ce cas, le circulateur 51 est également arrêté.

En résumé, l'installation 1 permet de mettre en œuvre une étape k) de réception de chaleur solaire par le système de captage solaire 45, suivie d'une étape I) de transfert de la chaleur solaire reçue, sélectivement au moyen du système d'aiguillage 53, 55, 57, 58, soit au fluide caloporteur du circuit C3, soit à l'eau de distribution.

De plus, l'installation 1 permet de mettre en œuvre une étape m), qui n'est effectuée que si le transfert de la chaleur solaire est effectué au fluide caloporteur du circuit C3, impliquant une mise en circulation FC3 du fluide caloporteur dans le circuit C3, au moyen du circulateur 51, afin de stocker le fluide caloporteur ainsi réchauffé dans le ballon de stockage 10. Les vannes 57 et 58 illustrées sont des vannes à trois voies. En variante, ces vannes 57 et 58 peuvent être remplacées chacune par deux vannes à deux voies, ce qui offre davantage de possibilités de réglage : en particulier, il est possible de fournir au réseau R1 de façon simultanée du fluide caloporteur provenant de la batterie 19 et du système de captage solaire 45.

Par ailleurs, l'installation 1 comprend un échangeur 65 de chaleur entre le fluide caloporteur et des eaux usées, ou des eaux évacuées par une ou plusieurs machines, de l'eau industrielle, ou de l'eau chauffée par un groupe froid, et en particulier des eaux dites « grises » ou « vannes » d'un réseau d'évacuation du bâtiment. Ces eaux usées peuvent par exemple être des eaux d'évacuation destinées à l'égout, et provenant de machines à laver, de lave-vaisselle, d'éviers, de douches ou de toilettes du bâtiment. Un circuit C4 de fluide caloporteur relie l'échangeur 65 au ballon de stockage 10 et inclut un circulateur 71 du fluide caloporteur au sein du circuit C4, dans le sens de la flèche FC4. En l'espèce, le circuit C4 est formé par une ligne 67 qui est connectée au ballon de stockage 10 en partie basse de ce dernier, et à l'échangeur 65. Le circulateur 71 est disposé sur la ligne 67. La ligne 69 permet de ramener le fluide caloporteur au ballon de stockage 10, et relie ainsi l'échangeur 65 et le ballon de stockage 10, en partie haute de ce dernier.

L'installation 1 permet ainsi d'effectuer une étape n) de mise en circulation du fluide caloporteur au sein d'un circuit C4 au moyen du circulateur 71, une étape o) d'échange thermique entre les eaux usées et le fluide caloporteur du circuit C4 au moyen de l'échangeur 65, et une étape de stockage du fluide caloporteur ainsi réchauffé du circuit C4 dans le ballon de stockage 10.

L'unité de pilotage 100 ne met en marche le circulateur 71 que si la température T65 des eaux usées, dite température de référence, est supérieure à la température T11. Ainsi, dans le procédé de production d'eau chaude, l'échange thermique entre les eaux usées et le fluide caloporteur n'est effectué que si la température T65 est supérieure à la température T11.

L'installation 1 inclut en outre, au sein du ballon de stockage 10, un échangeur 73 de chaleur. Cet échangeur 73 se présente par exemple sous la forme d'un serpentin qui s'étend en spirale coaxiale avec un axe vertical du ballon, au sein de ce dernier. L'échangeur 73 est connecté d'une part à une conduite d'arrivée d'eau 75 du réseau d'eau R1, et d'autre part à une conduite 77 d'alimentation en eau de moyens de chauffage d'eau sanitaire, tels qu'une ou plusieurs chaudières à gaz ou ballons de chauffage d'eau, du bâtiment.

De préférence, le réseau d'eau R1 inclut un premier sous-réseau qui inclut la conduite d'arrivée d'eau 75 et la conduite d'alimentation 77, ce premier sous-réseau étant connecté par l'intermédiaire de la conduite d'arrivée à une source d'eau S collective, par exemple le réseau d'eau d'une ville. L'eau provenant de la source d'eau S est dite « froide », c'est-à-dire qu'elle n'a pas subi de chauffage, et qu'elle est par exemple à la température du sol. L'eau de la source S est préférentiellement potable. Le réseau d'eau R1 inclut alors également un deuxième sous-réseau, qui forme un circuit fermé, et qui inclut la conduite d'arrivée 31, et la conduite d'alimentation 33 pour l'alimentation en eau de chauffage destiné à réguler la température ambiante de l'intérieur du bâtiment.

La conduite d'arrivée 75 et la conduite d'alimentation 77 appartiennent au réseau d'eau R1. En amont de l'échangeur 73, sur la conduite d'arrivée 75, l'installation 1 comprend une vanne d'aiguillage 79, à partir de laquelle est connectée une conduite de dérivation 81 qui relie la vanne d'aiguillage 79 à la conduite d'alimentation 77 en aval de l'échangeur 73. La vanne d'aiguillage 79 est commandée de façon automatique par l'unité de pilotage 100. Cette vanne d'aiguillage 79 permet d'orienter sélectivement l'eau de la conduite d'arrivée 75 :
- soit dans l'échangeur 73, afin qu'elle soit réchauffée par échange thermique avec le fluide caloporteur stocké dans le ballon de stockage 10, de façon à ce que l'eau reçoive de la chaleur provenant du fluide caloporteur stocké,
- soit directement vers la conduite d'alimentation 77 par l'intermédiaire de la conduite de dérivation 81, sans passer par l'échangeur 73.

En tout état de cause, le réseau d'eau collectif fournit avantageusement la pression nécessaire à la mise en circulation de l'eau au sein de l'échangeur 73 et/ou à la conduite d'alimentation 77. Alternativement, un surpresseur additionnel peut être prévu, en étant placé par exemple en amont de l'échangeur 73.

La vanne d'aiguillage 79 aiguille l'eau de la conduite d'arrivée 75 dans l'échangeur 73 seulement si la température T75 de cette eau provenant de la source d'eau S est inférieure à la température T11 du fluide caloporteur stocké dans le ballon de stockage 10.

En définitive, l'installation 1 permet de mettre en œuvre une étape q) d'échange thermique entre l'eau du réseau d'eau R1 et le fluide caloporteur du ballon de stockage 10 au moyen de l'échangeur 73.

Dans l'exemple de la figure 1, l'installation 1 peut mettre en œuvre une pluralité de pompes à chaleur 17, une pluralité de ballons de stockage 10, une pluralité de dispositifs d'extraction 2, une pluralité de systèmes de captage solaire 25 et une pluralité d'échangeurs 9 et/ou 65 et/ou 73. Les différents circuits, circulateurs, vannes d'aiguillage, vannes de pontage, ou vannes de dérivation, et les différentes conduites, décrits dans ce qui précède, sont alors adaptés en conséquence.

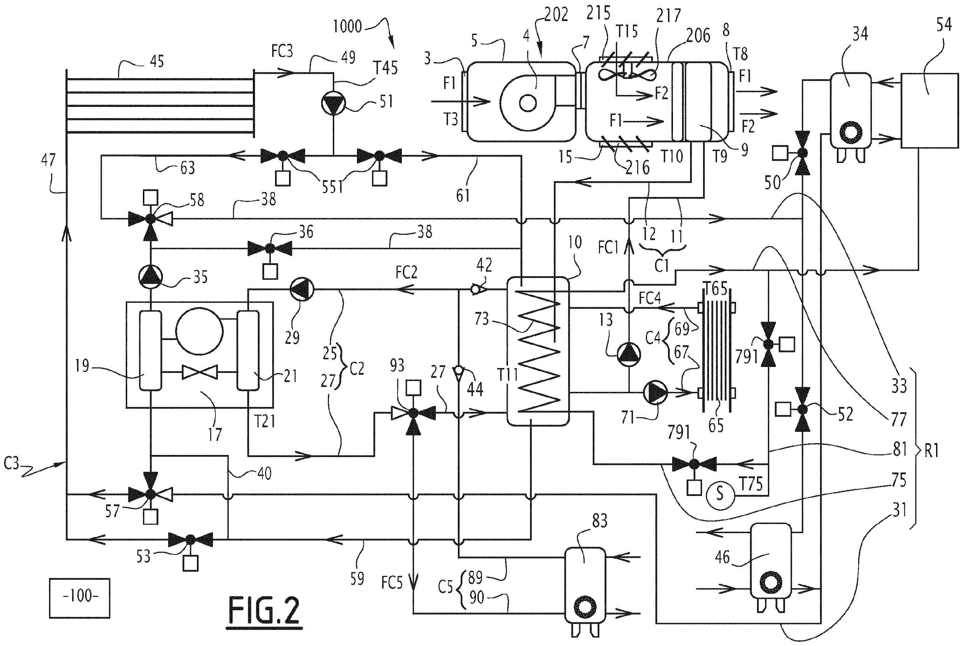

La figure 2 montre un deuxième mode de réalisation de l'installation précédemment décrite. Pour cette figure, les éléments qui sont similaires aux de l'installation 1 portent les mêmes références et ne sont pas à nouveau décrits. La description des modes de réalisation qui suivent se concentre sur les différences qui existent entre l'installation 1 de la figure 1, et une installation 1000 illustrée à la figure 2.

L'installation 1000 illustrée à la figure 2 comprend notamment un dispositif d'extraction 202, un échangeur 9, une pompe à chaleur 17, un ballon de stockage 10, un circuit C1, un circuit C2, un système de captage solaire 45, un circuit C3, un échangeur 65, un circuit C4, un échangeur 73, et un réseau d'eau R1.

Le dispositif d'extraction 202 comprend, comme le dispositif d'extraction 2, une bouche d'extraction 3, un extracteur d'air 4 et un compartiment 5, afin d'admettre un flux d'air F1 en provenance de l'intérieur du bâtiment dans le compartiment 5. Le dispositif d'extraction 202 comprend également un compartiment 206 qui est connecté au compartiment 5 par l'intermédiaire de la bouche de transfert 7, cette dernière étant située à la sortie de l'extracteur d'air 4 situé dans le compartiment 5. Le compartiment 5 et le compartiment 206 forment un caisson. Le compartiment 206 est pourvu d'une bouche de sortie 8 par l'intermédiaire de laquelle le flux d'air F1 est destiné à s'échapper du caisson. L'échangeur 9 est situé au sein du compartiment 206 entre la bouche de transfert 7 et la bouche de sortie 8. Ainsi le flux d'air F1 passe au travers de l'échangeur 9 avant de s'échapper par la bouche de sortie 8.

Le compartiment 206 comprend également une bouche d'admission haute 215 d'un flux d'air F2, en provenance de l'extérieur du bâtiment, vers l'intérieur du compartiment 206. La bouche d'admission haute 215 est disposée de manière à ce que le flux F2 traverse l'échangeur 9 avant de s'échapper par la bouche de sortie 8, tout comme le flux d'air F1. Un ventilateur 217 est optionnellement disposé dans le compartiment 206 en regard de la bouche d'admission haute 215 afin d'aspirer le flux d'air F2 au sein du compartiment 206.

De préférence, le flux d'air F2 se mélange au flux d'air F1 avant et/ou pendant sa circulation au sein de l'échangeur 9. Le flux d'air F2 est admis dans le compartiment 206 avec une température T15 correspondant à la température de l'air extérieur, c'est-à-dire la température ambiante extérieure. Dans le cas représenté à la figure 2, la bouche d'admission haute 215 forme un dispositif d'admission du flux d'air F2 pour permettre un échange de chaleur entre ce flux d'air et le fluide caloporteur, via l'échangeur 9.

La bouche d'admission haute 215 peut évoluer entre une configuration fermée, c'est-à-dire bloquante empêchant le passage respectivement du flux d'air F2, et une configuration ouverte dans laquelle le passage de ce flux est autorisé. Pour obtenir ce résultat, le ventilateur 217 peut être activé ou désactivé concomitamment respectivement à l'ouverture et à la fermeture de la bouche d'admission haute 215. Selon cette configuration, la bouche d'admission 215 et le ventilateur 217 permettent d'autoriser ou d'interdire l'admission du flux d'air F2 de façon sélective, et donc les échanges de chaleur entre ce flux et le fluide caloporteur dans l'échangeur 9. Il est ainsi possible, d'utiliser le flux d'air F2 pour transférer des calories au fluide caloporteur.

Ainsi, dans le cas où la température T15 de l'air extérieur est supérieure à la température T11, l'unité de pilotage peut ordonner l'admission du flux d'air F2. Dans ce cas, les flux d'air F1 et F2 peuvent être admis en même temps au sein de l'échangeur 9 pour apporter davantage d'énergie thermique au fluide caloporteur.

Enfin, dans le cas où la température du flux d'air F1 et du flux d'air F2 est inférieure aux températures T9 et/ou T11, le circulateur 13 est arrêté.

Une bouche d'urgence 216 est située en partie basse du compartiment 206, tout comme la bouche d'urgence 16 du premier mode de réalisation, pour permettre d'évacuer de l'air brûlant ou des fumées d'incendie. Le mode de réalisation de la figure 2 inclut ainsi un dispositif d'admission du flux d'air F2 formé par la bouche d'admission haute 215 et par le ventilateur 217.

En résumé, l'installation 1000 permet de mettre en œuvre une étape z) de comparaison de la température T3 du flux d'air F1 avec la température T11 du fluide caloporteur stocké dans le ballon de stockage 10 et à la température T15 de l'air extérieur. L'installation 1000 permet de mettre en œuvre une étape h) d'admission d'un flux d'air F2 provenant de l'extérieur du bâtiment au moyen du dispositif d'admission 215, 217, et une étape i) d'échange thermique entre le flux d'air F2 et le fluide caloporteur au moyen de l'échangeur 9.

L'installation 1000 permet en outre de mettre en œuvre une étape j) de mise en œuvre des étapes h) et i) seulement si la température T15 de l'air extérieur est supérieure à la température T11 du fluide caloporteur stocké dans le ballon de stockage 10.

Sur la figure 2, la vanne d'aiguillage 55 du premier mode de réalisation a été remplacée par deux vannes simples 551 disposées respectivement sur les lignes 61 et 63, pour obtenir la même fonction. De même, la vanne d'aiguillage 79 a été remplacée par deux vannes simples 791 disposées respectivement sur la conduite d'arrivée d'eau 75 et la conduite de dérivation 81, pour obtenir la même fonction.

L'installation 1000 comprend également un ballon de préchauffage 34 d'eau sanitaire et un ballon d'eau de chauffage 46. Le ballon de préchauffage 34 et le ballon d'eau de chauffage 46 sont tous deux alimentés par la conduite d'alimentation 33, par l'intermédiaire de deux vannes 50 et 52, commandées par l'unité de pilotage 100 et qui permettent d'autoriser et d'interdire sélectivement l'alimentation respective du ballon de préchauffage 34 et du ballon d'eau de chauffage 46 par la conduite d'alimentation 33. En fonction des besoins et des régimes de température, les deux vannes peuvent être ouvertes en même temps. Le ballon de préchauffage 34 est lui-même connecté à des moyens de production d'eau chaude sanitaire 54 terminale, incluant par exemple une chaudière, une résistance électrique, ou un réseau de chauffage urbain, ou plusieurs de ces éléments, afin de leur apporter de la chaleur provenant de la conduite d'alimentation 33 et contribuer à chauffer l'eau à usage sanitaire. Les moyens de production d'eau chaude sanitaire 54 sont également alimentés en eau provenant de la source d'eau S par le biais de la conduite d'alimentation 77 ou de la conduite de dérivation 81, selon l'état des vannes 791.

Le ballon d'eau de chauffage 46 permet quant à lui de chauffer, ou au moins de contribuer à chauffer, l'eau de chauffage destiné à chauffer l'air intérieur du bâtiment, par exemple par l'intermédiaire de radiateurs à eau ou de ventilo-convecteurs.

L'installation 1000 comprend également un ballon 83 d'eau refroidie, dite « glacée » et un circuit C5 de fluide caloporteur reliant le ballon d'eau refroidie 83 à la batterie 21 et/ou au ballon de stockage 10. On entend par « eau refroidie » ou « eau glacée », de l'eau sous forme liquide, dont la température est comprise par exemple entre 0°C et 10°C, ou entre 0°C et la température ambiante, et qui est inférieure à celle de « l'eau froide » qui provient de la source d'eau S. L'eau refroidie du ballon d'eau refroidie 83 est, au moins majoritairement, destinée à alimenter des émetteurs terminaux à eau refroidie, c'est-à-dire des moyens pour rafraîchir l'air intérieur du bâtiment ou une eau de process, destinée par exemple à être mise en œuvre dans un bassin de lavage de salade ou une presse de plasturgie.

En pratique, le circuit C5 est disposé de façon à permettre un échange d'énergie thermique entre le ballon d'eau refroidie 83 et le fluide caloporteur du circuit C5, afin de permettre un refroidissement de l'eau contenue dans le ballon d'eau refroidie 83. Alternativement, si le fluide caloporteur est de l'eau, il peut être directement stocké dans le ballon d'eau refroidie 83. Le circuit C5 inclut une ligne 90 de fluide caloporteur qui est connectée à la ligne 27 du circuit C2, c'est-à-dire entre le ballon de stockage 10 et la batterie 21. Une vanne d'aiguillage 93 est prévue pour aiguiller sélectivement le fluide caloporteur en provenance de la batterie 21 soit dans le ballon de stockage 10, soit dans le ballon d'eau refroidie 83. Le circuit C5 inclut également une ligne 89 pour ramener le fluide caloporteur depuis le ballon d'eau refroidie 83 jusqu'à la ligne 25 du circuit C2. Le fluide caloporteur est mis en circulation dans le circuit C5 selon la flèche FC5 par l'intermédiaire du circulateur 29. La vanne d'aiguillage 93 permet ainsi de sélectionner lequel du ballon de stockage 10 ou du ballon d'eau refroidie 83 peut échanger thermiquement avec la batterie 21.

Telle qu'illustrée à la figure 2, la ligne 25 est dotée d'un dispositif anti-retour 42 disposé entre le ballon de stockage 10 et l'embranchement de la ligne 89. La ligne 89 est quant à elle doté d'un dispositif anti-retour 44. Les dispositifs anti-retour 42 et 44 permettent de garantir que la circulation du fluide caloporteur s'effectue bien selon la flèche FC2 ou selon la flèche FC5 en fonction de l'orientation de la vanne d'aiguillage 93.

La vanne 93 illustrée est une vanne à trois voies. Toutefois, en variante, chacune des lignes 89 et 90 peut être équipée d'une vanne à deux voies, ces deux vannes assurant une fonction similaire à celle de la vanne 93.

L'installation 1000 de la figure 2 comprend en outre une conduite de dérivation 38, qui est connectée :
- d'une part à la conduite d'alimentation 33 dans laquelle circule de l'eau, entre le circulateur d'eau 35 et la vanne d'aiguillage 58,
- d'autre part au ballon de stockage 10.

La conduite de dérivation 38 inclut une vanne 36 qui permet sélectivement d'autoriser ou d'interdire la circulation d'eau en son sein. L'installation 1000 comprend également une conduite de retour 40 connectant le ballon de stockage 10 à la conduite d'arrivée 31, entre la vanne d'aiguillage 57 et la batterie 19.

Ainsi, lorsque le ballon d'eau refroidie 83 nécessite d'être utilisé, la vanne d'aiguillage 93 oriente le fluide caloporteur, provenant de la batterie 21, dans le circuit C5, de sorte que le fluide caloporteur circule entre la batterie 21 et le ballon d'eau refroidie 83, et non plus le ballon de stockage 10. Dans ce cas de figure, la vanne d'aiguillage 58 est fermée, et la vanne 36 est ouverte, de sorte que l'eau circule depuis la batterie 19 jusqu'au ballon de stockage 10 via la conduite de dérivation 38, et retourne à la batterie 19 via la conduite de retour 40. L'excédent de chaleur produit par la pompe à chaleur 17 pour le refroidissement du ballon d'eau refroidie est ainsi transmis au ballon de stockage 10. Cette chaleur excédentaire peut ensuite être évacuée, par exemple dans le flux d'air F1 par l'intermédiaire de l'échangeur 9, par mise en circulation du fluide caloporteur dans le circuit C1.

Dans certains cas de figure, il peut se produire que le bâtiment nécessite à la fois d'être chauffé et d'être refroidi. Par exemple, l'air intérieur de locaux du bâtiment disposés en façade nord peut nécessiter un chauffage, alors que l'air intérieur de locaux disposés en façade sud, en plein soleil, peuvent nécessiter d'être refroidis. Par exemple, un local d'équipements électroniques ou de télécommunications peut nécessiter un rafraîchissement, alors que les autres locaux situés dans le même bâtiment peuvent dans le même temps nécessiter d'être chauffés. Dans ce cas, le fluide caloporteur circulant dans la batterie 19 est envoyé au ballon de préchauffage 34 par fermeture de la vanne 36 et ouverture de la vanne 58. De la même façon, le fluide caloporteur circulant dans la batterie 19 peut être envoyé au ballon d'eau de chauffage 46.

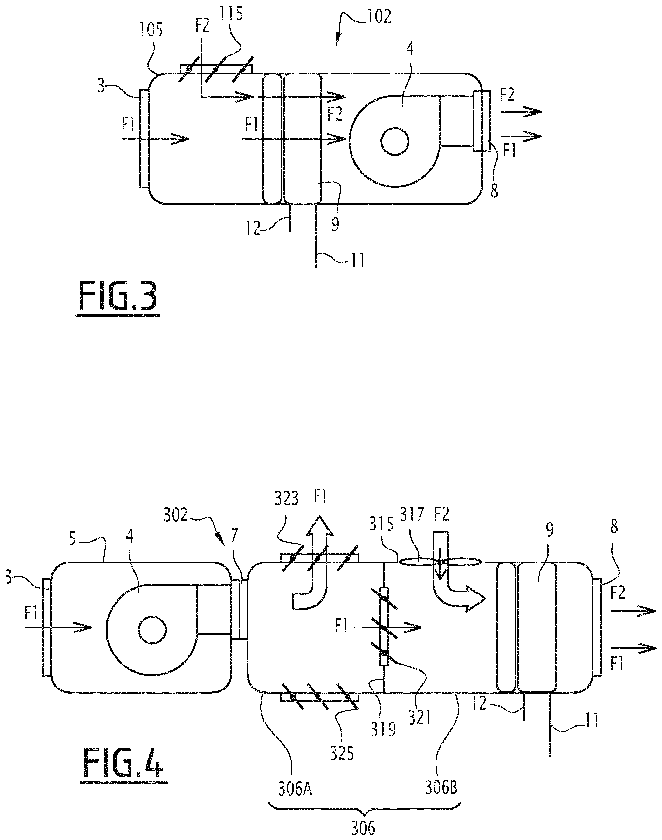

Les figures 3 et 4 montrent respectivement des dispositifs d'extraction appartenant respectivement à un troisième et un quatrième modes de réalisation de l'installation précédemment décrite. Pour ces figures, les éléments qui sont similaires aux éléments du dispositif d'extraction 2 portent les mêmes références et ne sont pas à nouveau décrits. La description des modes de réalisation qui suivent se concentre sur les différences qui existent entre le dispositif d'extraction 2 de la figure 1, et ceux représentés aux figures 3 et 4.

La figure 3 montre un dispositif d'extraction 102 comprenant la bouche d'extraction 3 qui est ménagée dans un unique compartiment 105 formant le caisson du dispositif d'extraction 102. Le dispositif d'extraction 102 comprend également l'échangeur 9, lequel est disposé au sein de l'unique compartiment 105 pour permettre un échange de chaleur entre le flux d'air F1, admis par la bouche d'extraction 3, et le fluide caloporteur du circuit C1. Le dispositif d'extraction 102 comprend l'extracteur d'air 4 qui est disposé au sein de l'unique compartiment 105, en aval de l'échangeur 9, et qui débouche sur la bouche de sortie 8.

Dans ce dispositif d'extraction 102 l'échangeur 9 est placé entre la bouche d'extraction 3 et l'extracteur d'air 4. Le dispositif d'extraction 2 comprend également une bouche d'admission 115, disposée en partie haute, ou latérale, de l'unique compartiment 105, afin d'admettre le flux d'air F2 en aval de la bouche 3 d'admission du flux d'air F1 au sein de l'unique compartiment 105 et en amont de l'échangeur 9. La bouche d'admission 115 est ainsi disposée dans la paroi de l'unique compartiment 105 entre la bouche d'extraction 3 et l'échangeur 9. Les conditions d'ouverture et de fermeture de la bouche d'admission 115 sont préférentiellement les mêmes que celles décrites ci-avant pour la bouche d'admission 215, du deuxième mode de réalisation de la figure 2.

La figure 4 illustre un dispositif d'extraction 302, lequel comprend un caisson, incluant lui-même le compartiment 5, avec la bouche d'admission 3, l'extracteur d'air 4 et la bouche de transfert 7. Le dispositif d'extraction 302 comprend également un compartiment 306 formant conjointement avec le compartiment 5 le caisson du dispositif d'extraction 302. Le compartiment 306 est connecté au compartiment 5 par l'intermédiaire de la bouche de transfert 7, et inclut l'échangeur 9, ainsi que la bouche de sortie 8 par l'intermédiaire de laquelle le flux d'air F1 et le flux d'air F2 sont destinés à s'échapper. Le compartiment 306 comprend également un ventilateur d'admission 317 qui est placé dans une ouverture 315 d'admission du flux d'air F2 dans la paroi du compartiment 306. Le flux d'air F2 est ainsi admis par l'intermédiaire du ventilateur 317 dans le compartiment 306 pour ensuite s'échapper par la bouche de sortie 8, après être passé au travers de l'échangeur 9. Le compartiment 306 inclut également une cloison de séparation 319 pourvue d'une bouche intermédiaire 321. La cloison intermédiaire 319 sépare le compartiment 306 en une partie 306A qui inclut la bouche de transfert 7, et en une partie 306B qui inclut l'échangeur 9, la bouche de sortie 8 et le ventilateur 317 d'admission du flux d'air F2. La bouche intermédiaire 321 est conçue pour évoluer entre une configuration dans laquelle elle autorise le passage du flux d'air F1 à travers la paroi 319, et une configuration dans laquelle elle interdit le passage de ce flux d'air. La partie 306A du compartiment 306 comprend une bouche de sortie intermédiaire 323 . La bouche de sortie intermédiaire 323 peut être placée en partie haute du compartiment 306 et permet l'échappement du flux F1 lorsque la bouche intermédiaire 321 est fermée.

La partie 306A comprend également une bouche d'urgence 325, pouvant être placée en partie basse, pour l'évacuation d'air brûlant ou des fumées d'incendie en provenance de l'intérieur du bâtiment, afin d'éviter que ces dernières n'atteignent l'échangeur 9.

La bouche 325 est facultative dans ce dispositif d'extraction. A titre de variante, l'évacuation de l'air brûlant ou des fumées d'incendie peut se faire à travers la bouche 323, lorsque cette dernière est ouverte et que la bouche 321 est fermée.

Le ventilateur 317, et les bouches 315, 321 et 323 forment dans ce cas-là des moyens de sélection permettant sélectivement d'autoriser ou d'interdire les échanges de chaleur, via l'échangeur 9, entre d'une part le flux d'air F1 et le fluide caloporteur, d'autre part entre le flux d'air F2 et le fluide caloporteur. Le flux d'air F1 ou F2 de la température la plus élevée est alors préférentiellement choisi pour fournir des calories au fluide caloporteur via l'échangeur 9. Dans le cas où les températures T15 de l'air extérieur et T3 du flux d'air F1 sont inférieures à la température T9 ou T11, du fluide caloporteur, les bouches 315, 321 et 323 sont configurées pour que ni le flux d'air F1 ni le flux d'air F2 n'atteignent l'échangeur.

En tout état de cause, le flux d'air F1 peut être dévié via la bouche de sortie intermédiaire 323 afin de ne pas passer par l'échangeur 9, sans être interrompu, de sorte que la ventilation du bâtiment peut être assurée en continu.

Les modes de réalisation envisagés et variantes dans ce qui précède peuvent être combinés pour générer de nouveaux modes de réalisation de l'invention.

## Revendications

1. Bâtiment, équipé d'une installation (1 ; 1000) de production d'eau chaude pour le bâtiment, l'installation comprenant :
- un dispositif d'extraction (2; 102; 202; 302) d'un premier flux d'air (F1), provenant de l'intérieur du bâtiment, vers l'extérieur de ce dernier,
- un premier échangeur (9) permettant un échange de chaleur entre le premier flux d'air et un fluide caloporteur,
- une pompe à chaleur (17) comprenant une première batterie (19) d'échange et une deuxième batterie (21) d'échange, la pompe à chaleur étant conçue pour opérer un transfert de chaleur depuis la deuxième batterie vers la première batterie, cette dernière étant conçue pour transférer sa chaleur à de l'eau d'un réseau d'eau (R1) du bâtiment, cette eau étant une eau destinée à alimenter une machine, à un usage sanitaire, et/ou à des fins de chauffage du bâtiment, la deuxième batterie étant conçue pour recevoir de la chaleur du fluide caloporteur, l'installation (1; 1000) comprenant en outre :
- un ballon de stockage (10) du fluide caloporteur,
- un premier circuit (C1) de fluide caloporteur reliant le premier échangeur (9) au ballon de stockage, et incluant un premier circulateur (13) du fluide caloporteur au sein du premier circuit (C1), et
- un deuxième circuit (C2) de fluide caloporteur reliant la deuxième batterie (21) au ballon de stockage, et incluant un deuxième circulateur (29) du fluide caloporteur au sein du deuxième circuit,
et le ballon de stockage (10) inclut en son sein un deuxième échangeur (73) de chaleur entre le fluide caloporteur du ballon de stockage et l'eau du réseau d'eau (R1), pour que l'eau du réseau d'eau soit réchauffée par échange thermique avec le fluide caloporteur stocké dans le ballon de stockage,
et le deuxième échangeur (73) est connecté d'une part à une conduite d'arrivée d'eau (75) du réseau d'eau (R1), et d'autre part à une conduite (77) pour l'alimentation en eau de moyens de chauffage d'eau sanitaire du bâtiment.

2. Bâtiment selon la revendication précédente, **caractérisée en ce que** l'installation comprend un dispositif d'admission (115 ; 215, 217) d'un deuxième flux d'air (F2), provenant de l'extérieur du bâtiment, pour permettre un échange de chaleur entre le deuxième flux d'air et le fluide caloporteur via le premier échangeur (9).

3. Bâtiment selon l'une quelconque des revendications précédentes, **caractérisée en ce que** l'installation comprend :
- un système de captage solaire (45),
- un troisième circuit (C3) de fluide caloporteur reliant le système de captage solaire au ballon de stockage (10), et incluant un troisième circulateur (51) du fluide caloporteur au sein du troisième circuit, et
- un système d'aiguillage (53, 55, 57, 58) permettant d'autoriser sélectivement un transfert de la chaleur solaire reçue par le système de captage solaire :
∘ au fluide caloporteur du troisième circuit, ou
∘ à l'eau du réseau d'eau (R1).

4. Bâtiment, selon l'une quelconque des revendications précédentes, **caractérisé en ce que** l'installation comprend :
- un troisième échangeur (65) de chaleur entre le fluide caloporteur et des eaux usées d'un réseau d'évacuation du bâtiment, et
- un quatrième circuit (C4) de fluide caloporteur reliant le troisième échangeur (65) au ballon de stockage (10), et incluant un quatrième circulateur (71) du fluide caloporteur au sein du quatrième circuit.

5. Bâtiment, selon l'une quelconque des revendications précédentes, **caractérisé en ce que** l'installation comprend un ballon d'eau refroidie (83) et un cinquième circuit (C5) de fluide caloporteur reliant le ballon d'eau refroidie à la deuxième batterie (21) et/ou au ballon de stockage (10).

6. Procédé de production d'eau chaude pour un bâtiment selon l'une quelconque des revendications précédentes, le procédé comportant les étapes suivantes :
- a) extraction du premier flux d'air (F1) provenant de l'intérieur du bâtiment, afin de le faire circuler vers l'extérieur de ce dernier, au moyen du dispositif d'extraction (2; 102; 202; 302),
- b) mise en circulation (FC1) du fluide caloporteur au sein du premier circuit (C1) au moyen du premier circulateur (13),
- c) échange thermique entre le premier flux d'air et le fluide caloporteur, au moyen du premier échangeur (9),
- d) stockage du fluide caloporteur du premier circuit dans le ballon de stockage (10),
- e) mise en circulation (FC2) du fluide caloporteur dans le deuxième circuit (C2) au moyen du deuxième circulateur (29), et
- f) transfert de chaleur, au moyen de la pompe à chaleur (17), depuis le fluide caloporteur circulant dans le deuxième circuit par l'intermédiaire de la deuxième batterie, vers l'eau du réseau d'eau (R1) du bâtiment par l'intermédiaire de la première batterie, et
- q) échange thermique entre l'eau du réseau d'eau (R1) et le fluide caloporteur du ballon de stockage au moyen du deuxième échangeur (73), pour réchauffer l'eau du réseau d'eau (R1) par échange thermique avec le fluide caloporteur stocké dans le ballon de stockage.

7. Procédé selon la revendication 6, mis en œuvre pour le bâtiment selon la revendication 2, **caractérisé en ce qu'**il comporte, en outre, les étapes suivantes :
- z) comparaison de la température (T3) du premier flux d'air (F1) avec la température (T11) du fluide caloporteur stocké dans le ballon de stockage (10) et avec la température (T15) de l'air extérieur,
- h) admission d'un deuxième flux d'air (F2), provenant de l'extérieur du bâtiment, au moyen du dispositif d'admission (115 ; 215, 217 ; 315),
- i) échange thermique entre le deuxième flux d'air et le fluide caloporteur au moyen du premier échangeur (9),
- j) mise en œuvre des étapes h) et i) seulement si la température de l'air extérieur est supérieure à la température du fluide caloporteur stocké dans le ballon de stockage.

8. Procédé selon l'une quelconque des revendications 6 ou 7, mis en œuvre pour le bâtiment selon la revendication 3, **caractérisé en ce qu'**il comporte, en outre, les étapes suivantes :
- k) réception de chaleur solaire par le système de captage solaire (45),
- l) transfert de la chaleur solaire reçue, sélectivement au moyen du système d'aiguillage (53, 55, 57, 58) :
∘ l1) au fluide caloporteur du troisième circuit (C3), ou
∘ l2) à l'eau du réseau d'eau,
- m) mise en circulation (FC3) du fluide caloporteur dans le troisième circuit au moyen du troisième circulateur (51) afin de stocker le fluide caloporteur dans le ballon de stockage (10), seulement si l'étape l1) est effectuée.

9. Procédé selon l'une quelconque des revendications 6 à 8, mis en œuvre pour le bâtiment selon les revendications 4 et 5, **caractérisé en ce qu'**il comporte, en outre, les étapes suivantes :
- n) mise en circulation du fluide caloporteur au sein du quatrième circuit (C4) au moyen du quatrième circulateur (71),
- o) échange thermique entre les eaux usées et le fluide caloporteur au moyen du troisième échangeur (65),
- p) stockage du fluide caloporteur du quatrième circuit (C4) dans le ballon de stockage (10).

## Patentansprüche

1. Gebäude, das mit einer Anlage (1; 1000) zur Warmwasserproduktion für das Gebäude ausgestattet ist, wobei die Anlage umfasst:
- eine Extraktionsvorrichtung (2; 102; 202; 302) eines ersten Luftflusses (F1), der aus dem Inneren des Gebäudes stammt, von diesem Letzteren ins Freie,
- einen ersten Austauscher (9), der einen Wärmeaustausch zwischen dem ersten Luftfluss und einem Wärmeträgermedium erlaubt,
- eine Wärmepumpe (17), die eine erste Austauschgruppe (19) und eine zweite Austauschgruppe (21) umfasst, wobei die Wärmepumpe dazu konzipiert ist, einen Wärmetransfer von der zweiten Gruppe zu der ersten Gruppe auszuführen, wobei diese Letztere dazu konzipiert ist, ihre Wärme an Wasser eines Wassernetzes (R1) des Gebäudes zu transferieren, wobei dieses Wasser ein Wasser ist, das zum Versorgen einer Maschine, zur Verwendung als Brauchwasser und/oder zu Heizzwecken des Gebäudes bestimmt ist, wobei die zweite Gruppe dazu konzipiert ist, Wärme des Wärmeträgermediums zu empfangen,
wobei die Anlage (1; 1000) außerdem umfasst:
- einen Lagertank (10) des Wärmeträgermediums,
- einen ersten Wärmeträgermediumkreislauf (C1), der den ersten Austauscher (9) mit dem Lagertank verbindet und eine erste Umlaufpumpe (13) des Wärmeträgermediums in dem ersten Kreislauf (C1) beinhaltet, und
- einen zweiten Wärmeträgermediumkreislauf (C2), der die zweite Gruppe (21) mit dem Lagertank verbindet und eine zweite Umlaufpumpe (29) des Wärmeträgermediums in dem zweiten Kreislauf beinhaltet,
und der Lagertank (10) einen zweiten Austauscher (73) von Wärme zwischen dem Wärmeträgermedium des Lagertanks und dem Wasser des Wassernetzes (R1) beinhaltet, damit das Wasser des Wassernetzes durch den Wärmeaustausch mit dem Wärmeträgermedium, das in dem Lagertank gelagert ist, aufgewärmt wird,
und der zweite Austauscher (73) einerseits mit einer Wasserzufuhrleitung (75) des Wassernetzes (R1) und andererseits mit einer Leitung (77) zur Wasserversorgung von Brauchwasserheizmitteln des Gebäudes verbunden ist.

2. Gebäude nach dem vorstehenden Anspruch, **dadurch gekennzeichnet, dass** die Anlage eine Einlassvorrichtung (115; 215, 217) eines zweiten Luftflusses (F2), der von außerhalb des Gebäudes stammt, umfasst, um einen Wärmeaustausch zwischen dem zweiten Luftfluss und dem Wärmeträgermedium über den ersten Austauscher (9) zu erlauben.

3. Gebäude nach einem der vorstehenden Ansprüche, **dadurch gekennzeichnet, dass** die Anlage umfasst:
- ein Sonnenwärmegewinnungssystem (45),
- einen dritten Wärmeträgermediumkreislauf (C3), der das Sonnenwärmegewinnungssystem mit dem Lagertank (10) verbindet und eine dritte Umlaufpumpe (51) des Wärmeträgermediums in dem dritten Kreislauf beinhaltet, und
- ein Verzweigungssystem (53, 55, 57, 58), das es erlaubt, selektiv einen Transfer der Sonnenwärme, die von dem Sonnenwärmegewinnungssystem empfangen wird, zu gestatten:
∘ zu dem Wärmeträgermedium des dritten Kreislaufs, oder
∘ zu dem Wasser des Wassernetzes (R1).

4. Gebäude nach einem der vorstehenden Ansprüche, **dadurch gekennzeichnet, dass** die Anlage umfasst:
- einen dritten Austauscher (65) von Wärme zwischen dem Wärmeträgermedium und dem Abwasser eines Abflussnetzes des Gebäudes, und
- einen vierten Wärmeträgermediumkreislauf (C4), der den dritten Austauscher (65) mit dem Lagertank (10) verbindet und eine vierte Umlaufpumpe (71) des Wärmeträgermediums in dem vierten Kreislauf beinhaltet.

5. Gebäude nach einem der vorstehenden Ansprüche, **dadurch gekennzeichnet, dass** die Anlage einen gekühlten Wassertank (83) und einen fünften Wärmeträgermediumkreislauf (C5), der den gekühlten Wassertank mit der zweiten Gruppe (21) und/oder mit dem Lagertank (10) verbindet, umfasst.

6. Warmwasserproduktionsverfahren für ein Gebäude nach einem der vorstehenden Ansprüche, wobei das Verfahren die folgenden Schritte umfasst:
- a) Extraktion des ersten Luftflusses (F1), der aus dem Inneren des Gebäudes stammt, um ihn aus diesem Letzteren mittels der Extraktionsvorrichtung (2; 102; 202; 302) ins Freie zirkulieren zu lassen,
- b) Inumlaufbringen (FC1) des Wärmeträgermediums in dem ersten Kreislauf (C1) mittels der ersten Umlaufpumpe (13),
- c) Wärmeaustausch zwischen dem ersten Luftfluss und dem Wärmeträgermedium mittels des ersten Austauschers (9),
- d) Lagern des Wärmeträgermediums des ersten Kreislaufs in dem Lagertank (10),
- e) Inumlaufbringen (FC2) des Wärmeträgermediums in dem zweiten Kreislauf (C2) mittels der zweiten Umlaufpumpe (29), und
- f) Wärmetransfer mittels der Wärmepumpe (17) von dem Wärmeträgermedium, das in dem zweiten Kreislauf zirkuliert, über die zweite Gruppe zu dem Wasser des Wassernetzes (R1) des Gebäudes über die erste Gruppe, und
- q) Wärmeaustausch zwischen dem Wasser des Wassernetzes (R1) und dem Wärmeträgermedium des Lagertanks mittels des zweiten Austauschers (73), um das Wasser des Wassernetzes (R1) durch Wärmeaustausch mit dem Wärmeträgermedium, das in dem Lagertank gelagert ist, aufzuwärmen.

7. Verfahren nach Anspruch 6, das für das Gebäude nach Anspruch 2 umgesetzt wird, **dadurch gekennzeichnet, dass** es außerdem die folgenden Schritte umfasst:
- z) Vergleich der Temperatur (T3) des ersten Luftflusses (F1) mit der Temperatur (T11) des Wärmeträgermediums, das in dem Lagertank (10) gelagert ist, und mit der Temperatur (T15) der Außenluft,
- h) Einlass eines zweiten Luftflusses (F2), der von außerhalb des Gebäudes stammt, mittels der Einlassvorrichtung (115; 215, 217; 315),
- i) Wärmeaustausch zwischen dem zweiten Luftfluss und dem Wärmeträgermedium mittels des ersten Austauschers (9),
- j) Umsetzen der Schritte h) und i) nur, falls die Temperatur der Außenluft höher ist als die Temperatur des Wärmeträgermediums, das in dem Lagertank gelagert ist.

8. Verfahren nach einem der Ansprüche 6 oder 7, das für das Gebäude nach Anspruch 3 umgesetzt wird, **dadurch gekennzeichnet, dass** es außerdem die folgenden Schritte umfasst:
- k) Empfang von Sonnenwärme durch das Sonnenwärmegewinnungssystem (45),
- l) Transfer der empfangenen Sonnenwärme selektiv mittels des Verzweigungssystems (53, 55, 57, 58):
∘ l1) zu dem Wärmeträgermedium des dritten Kreislaufs (C3), oder
∘ l2) zu dem Wasser des Wassernetzes,
- m) Inumlaufbringen (FC3) des Wärmeträgermediums in dem dritten Kreislauf mittels der dritten Umlaufpumpe (51), um das Wärmeträgermedium in dem Lagertank (10) nur zu lagern, falls Schritt l1) ausgeführt wird.

9. Verfahren nach einem der Ansprüche 6 bis 8, das für das Gebäude nach den Ansprüchen 4 und 5 umgesetzt wird, **dadurch gekennzeichnet, dass** es außerdem die folgenden Schritte umfasst:
- n) Inumlaufbringen des Wärmeträgermediums in dem vierten Kreislauf (C4) mittels der vierten Umlaufpumpe (71),
- o) Wärmeaustausch zwischen dem Abwasser und dem Wärmeträgermedium mittels des dritten Austauschers (65),
- p) Lagern des Wärmeträgermediums des vierten Kreislaufs (C4) in dem Lagertank (10).

## Claims

1. Building, fitted with an installation (1; 1000) for production of hot water for the building, the installation comprising:
- a device for extraction (2; 102; 202; 302) of a first airflow (F1) coming from the interior of the building, towards the exterior of the latter,
- a first exchanger (9) making possible a heat exchange between the first airflow and a heat transfer fluid,
- a heat pump (17) comprising a first exchange battery (19) and a second exchange battery (21), the heat pump being designed to implement a heat transfer from the second battery to the first battery, the latter being designed to transfer its heat to the water of a water network (R1) of the building, this water being water which is intended to supply a machine, for sanitary use, and/or for the purpose of heating the building, the second battery being designed to receive the heat of the heat transfer fluid,
the installation (1; 1000) comprising, furthermore:
- a storage tank (10) of the heat transfer fluid,
- a first circuit (C1) of heat transfer fluid connecting the first exchanger (9) to the storage tank and including a first circulator (13) of heat transfer fluid within the first circuit (C1), and
- a second circuit (C2) of heat transfer fluid connecting the second battery (21) to the storage tank and including a second circulator (29) of heat transfer fluid within the second circuit,
and the storage tank (10) includes in the centre thereof a second heat exchanger (73) between the heat transfer fluid of the storage tank and the water of the water network (R1), in order that the water of the water network is heated by heat exchange with the heat transfer fluid stored in the storage tank,
and the second exchanger (73) is connected, on the one hand, to a conduit for the arrival of water (75) from the water network (R1) and, on the other hand, to a conduit (77) for supply of water to the sanitary water heating means of the building.

2. Building according to the preceding claim, **characterised in that** the installation comprises a device for admission (115; 215; 217) of a second airflow (F2) coming from the exterior of the building, in order to make possible a heat exchange between the second airflow and the heat transfer fluid via the first exchanger (9).

3. Building according to any of the preceding claims, **characterised in that** the installation comprises:
- a system for solar collection (45),
- a third circuit (C3) of heat transfer fluid connecting the solar collection system to the storage tank (10) and including a third circulator (51) of the heat transfer fluid within the third circuit, and
- a switching system (53, 55, 57, 58) making it possible to allow selectively a transfer of the solar heat received by the solar collection system:
∘ to the heat transfer fluid of the third circuit, or
∘ to the water of the water network (R1).

4. Building according to any of the preceding claims, **characterised in that** the installation comprises:
- a third heat exchanger (65) between the heat transfer fluid and the used water of a discharge network of the building, and
- a fourth circuit (C4) of heat transfer fluid connecting the third exchanger (65) to the storage tank (10) and including a fourth circulator (71) of the heat transfer fluid within the fourth circuit.

5. Building according to any of the preceding claims, **characterised in that** the installation comprises a cooled water tank (83) and a fifth circuit (C5) of heat transfer fluid connecting the cooled water tank to the second battery (21) and/or to the storage tank (10).

6. Method for production of hot water for a building according to any of the preceding claims, the method comprising the following steps:
- a) extraction of the first airflow (F1) coming from the interior of the building, in order to make it circulate towards the exterior of the latter, by means of the extraction device (2; 102; 202; 302),
- b) circulating (FC1) the heat transfer fluid within the first circuit (C1) by means of the first circulator (13),
- c) heat exchange between the first airflow and the heat transfer fluid by means of the first exchanger (9),
- d) storage of the heat transfer fluid of the first circuit in the storage tank (10),
- e) circulating (FC2) the heat transfer fluid in the second circuit (C2) by means of the second circulator (29), and
- f) heat transfer by means of the heat pump (17), from the heat transfer fluid circulating in the second circuit by means of the second battery, towards the water of the water network (R1) of the building by means of the first battery, and
- q) heat exchange between the water of the water network (R1) and the heat transfer fluid of the storage tank by means of the second exchanger (73) in order to heat the water of the water network (R1) by heat exchange with the heat transfer fluid stored in the storage tank.

7. Method according to claim 6, implemented for the building according to claim 2, **characterised in that** it comprises, furthermore, the following steps:
- z) comparison of the temperature (T3) of the first airflow (F1) with the temperature (T11) of the heat transfer fluid stored in the storage tank (10) and with the temperature (T15) of the exterior air,
- h) admission of a second airflow (F2) coming from the exterior of the building, by means of the admission device (115; 215; 217; 315),
- i) heat exchange between the second airflow and the heat transfer fluid by means of the first exchanger (9),
- j) implementing steps h) and i) only if the temperature of the exterior air is higher than the temperature of the heat transfer fluid stored in the storage tank.

8. Method according to any of claims 6 or 7, implemented for the building according to claim 3, **characterised in that** it comprises, furthermore, the following steps:
- k) receipt of solar heat by the solar collection system (45),
- l) transfer of the received solar heat, selectively by means of the switching system (53, 55, 57, 58):
∘ |1) to the heat transfer fluid of the third circuit (C3), or
∘ |2) to the water of the water network,
- m) circulating (FC3) the heat transfer fluid in the third circuit by means of the third circulator (51) in order to store the heat transfer fluid in the storage tank (10) only if step |1) is implemented.

9. Method according to any of claims 6 to 8, implemented for the building according to claims 4 and 5, **characterised in that** it comprises, furthermore, the following steps:
- n) circulating the heat transfer fluid within the fourth circuit (C4) by means of the fourth circulator (71),
- o) heat exchange between the used water and the heat transfer fluid by means of the third exchanger (65),
- p) storage of the heat transfer fluid of the fourth circuit (C4) in the storage tank (10).
